Europäisches Patentamt

European Patent Office

Office européen des brevets

(19)

(11) Veröffentlichungsnummer : **0 210 375**
**B1**

(12) EUROPÄISCHE PATENTSCHRIFT

(45) Veröffentlichungstag der Patentschrift :
09.11.88

(21) Anmeldenummer : 86107323.7

(22) Anmeldetag : 30.05.86

(51) Int. Cl.⁴ : **B 65 B 35/30, F 16 B 21/00**

(54) Auf einem stabförmigen Träger anzuordnendes Element.

(30) Priorität : 28.06.85 DE 3523126

(43) Veröffentlichungstag der Anmeldung :
04.02.87 Patentblatt 87/06

(45) Bekanntmachung des Hinweises auf die Patenterteilung : 09.11.88 Patentblatt 88/45

(84) Benannte Vertragsstaaten :
FR GB IT

(56) Entgegenhaltungen :
DE-C- 935 022

(73) Patentinhaber : Hans Paal KG, Maschinenbau (GmbH
& Co)
Mühlhäuser Strasse 11
D-7056 Weinstadt (DE)

(72) Erfinder : Paal, Hans
Mühlhauser Strasse 11
D-7056 Weinstadt 3 (DE)

(74) Vertreter : Patentanwälte Phys. Bartels Dipl.-Ing. Fink
Dr.-Ing. Held
Lange Strasse 51
D-7000 Stuttgart 1 (DE)

EP 0 210 375 B1

## Beschreibung

Die Erfindung betrifft ein auf einem stabförmigen Träger anzuordnendes und in Trägerlängsrichtung in wählbare Positionen verschiebbare Element, welches die Merkmale des Oberbegriffs des Anspruches 1 aufweist.

Die bekannten Elemente dieser Art sind Stellringe. Die durch die Innenmantelfläche gebildete Führungsfläche solcher Stellringe hat in axialer Richtung eine Erstreckung, welche gleich der axialen Länge des Ringkörpers ist. Diese Stellringe neigen deshalb bei einer axialen Verschiebung umso mehr zu einem Verkanten, je geringer die in axialer Richtung gemessene Breite des Ringkörpers ist. Diese Eigenschaft tritt beispielsweise dann besonders störend in Erscheinung, wenn bei einer eine Mehrzahl von Zuführungskanälen bildenden Zuführeinrichtungen für Verpackungsmaschinen die Begrenzungswände der Kanäle am Anfang und Ende der Kanalstrecken an Stellringe angehängt sind und diese eine sehr geringe Breite haben müssen, um auch sehr schmale Kanäle realisieren zu können. Bei einer Umstellung auf eine andere Kanalbreite müssen hier die Stellringe in Längsrichtung der sie tragenden, stabförmigen Träger verschoben werden, was wegen des dabei in der Regel auftretenden Verklemmens der Stellringe auf dem Träger so zeitraubend ist, daß bereits Zuführeinrichtungen auf den Markt gebracht worden sind, bei denen zum Zwecke einer Veränderung der Kanalbreite und der Kanalzahl die Träger einschließlich der Begrenzungswände von der Förderstrecke abgehoben und durch einen vorbereiteten anderen Satz ersetzt werden, was allerdings auch aufwendig ist.

Der Erfindung liegt deshalb die Aufgabe zugrunde, ein Element der eingangs genannten Art zu schaffen, das auch bei geringer axialer Erstreckung ein gutes Führungsverhalten hat, also nicht zu einem Verkanten bei einer Axialverschiebung neigt und dennoch einfach und damit kostengünstig ausgebildet ist. Diese Aufgabe löst ein Element mit den Merkmalen des Anspruches 1.

Durch den Vorsprung wird die effektive Erstreckung der Führungsfläche in axialer Richtung von dem durch die in axiale Richtung gemessene Breite des Ringkörpers bedingten Maß um die in axiale Richtung gemessene Länge des Vorsprunges vergrößert, die ein Mehrfaches der Breite des Ringkörpers betragen kann. Dennoch ist der untere Grenzwert des Abstandes zwischen zwei nebeneinander auf dem Träger angeordneter Elemente nicht durch die effektive axiale Länge d, r, Führungsfläche, also der Breite des Ringkörpers plus der Länge des Vorsprunges, begrenzt, weil die erfindungsgemäße Ausbildung des Vorsprunges es ermöglicht, den Vorsprung eines benachbarten Elementes mehr oder weniger weit in denen vom Ringkörper und seinem Vorsprung begrenzten Hohlraum einzuführen. Der Vorsprung und der Hohlraum können sogar so ausgebildet sein, daß die Ringkörper zweier benachbarter Elemente in Anlage aneinander gebracht werden können. Das erfindungsgemäße Element erlaubt deshalb die Breite des Ringkörpers sehr gering zu wählen, so daß beispielsweise bei einer Zuführeinrichtung für eine Verpackungsmaschine sich ohne Schwierigkeiten eine Mehrzahl von parallelen Kanälen mit einer sehr geringen Breite realisieren läßt. Dennoch kann die axiale Länge der Führungsfläche so groß gewählt werden, daß die Gefahr des Verklemmens bei einer axialen Verschiebung des Elementes weitgehend oder vollständig ausgeschlossen ist. Da dieses günstige Führungsverhalten keine engen Toleranzen und aufwendige Bearbeitungsvorgänge, erforderlich macht, sondern allein durch die axiale Länge der Führungsfläche erreicht wird, und der Vorsprung ein Körper ist, welcher problemlos an den Ringkörper angesetzt werden oder auch an diesen angeformt sein kann, ist der Aufwand für das erfindungsgemäße Element nur unwesentlich größer als für einen bekannten Stellring.

Bei einer bevorzugten Ausführungsform hat der Vorsprung die Form eines durch zwei in wenigstens einer Radialebene liegende Schnitte begrenzten Teiles einer sich zu seinem freien Ende hin verjüngenden Hohlkörpers. Wegen ihrer einfachen Geometrie ist hierbei die Form einer Pyramide oder eines Kegels besonders vorteilhaft. Der Vorsprung kann also beispielsweise die Form einer in Längsrichtung mittig geteilten, hohlen Pyramide oder des entsprechenden Hohlkegelteiles ausgebildet sein, wobei bei einer Pyramidenform an eine Teilung über Eck in Frage kommt. Im Interesse einer möglichst einfachen Form des Vorsprunges wird man in der Regel einen Hohlkörper wählen, der sich stetig zu seinem Ende hin verjüngt. Aber auch eine unstetige, beispielsweise stufenförmige Verjüngung, könnte verwendet werden.

Da es aus Festigkeitsgründen, aber auch aus Fertigungsgründen, vorteilhaft ist, die axiale Länge des Vorsprunges so gering wie möglich zu machen, ist es vorteilhaft, wenigstens einen zweiten Vorsprung vorzusehen, der sich entgegen der Erstreckungsrichtung des ersten Vorsprunges vom Ringkörper weg erstreckt. Die Länge der beiden Vorsprünge braucht dann nur je die Hälfte der gesamten erforderlichen Verlängerung der Führungsfläche in axialer Richtung zu betragen.

Vorteilhafterweise haben beide Vorsprünge die gleiche Form und Größe. Ein wesentlicher Vorteil hiervon besteht darin, daß es keine Rolle spielt, in welche Ausrichtung wenigstens zwei der Elemente nebeneinander auf dem stabförmigen Träger angeordnet werden.

Bei einer bevorzugten Ausführungsform des erfindungsgemäßen Elementes erstrecken sich vom Ringkörper in jede der beiden axialen Richtungen wenigstens zwei Vorsprünge weg, die eine Anordnung gemäß Anspruch 5 haben. Durch eine solche Anordnung der Vorsprünge bleibt die Möglichkeit gewahrt, mehrere gleich ausgebildete Elemente axial nebeneinander so anzuordnen, daß die Vorsprünge in die Hohlräume des benachbarten Elementes eindringen können.

Um das Element in einfacher Weise in der gewählten Position auf dem Träger feststellen zu können, weist sein Ringkörper wenigstens eine Teilungsfuge auf, die ein Zusammenspannen und damit ein Festklemmen auf dem Träger ermöglicht. Vorzugsweise ist der Ringkörper jedoch in wenigstens zwei mittels seiner Spannvorrichtung zusammenspannbare Teile geteilt, die alle die gleiche Form haben und mit der gleichen Anzahl von Vorsprüngen versehen sind. Dabei ist es möglich, das Element aus lauter gleichen Einzelteilen zusammen zu setzen, was den Fertigungsaufwand erheblich reduziert.

Um in einfacher Weise die Elemente mittels einer Schablone oder dergleichen im gewünschten Abstand voneinander positionieren zu können, kann die Spannvorrichtung wenigstens eine Spannschraube aufweisen, deren eines Ende als ein über den Ringkörper überstehender Bolzen ausgebildet. An diesem Bolzen kann die Schablone oder dergleichen angesetzt werden.

Die Form des Ringkörpers ist nicht auf die Form eines Hohlzylinders beschränkt. Der Ringkörper kann auch die Außenkontur und/oder die Innenkontur eines Polygons haben, was beispielsweise dann von Vorteil ist, wenn das Element gegen ein Verdrehen auf dem Träger gesichert sein soll. Ist die Führungsfläche durch ein regelmäßiges Polygon definiert, dann ist die Anordnung der Vorsprünge in den Ecken dieses Polygons besonders vorteilhaft.

Im folgenden ist die Erfindung anhand eines in der Zeichnung dargestellten Ausführungsbeispiels im einzelnen erläutert. Es zeigen :

Fig. 1 eine Draufsicht auf das Ausführungsbeispiel,

Fig. 2 eine Seitenansicht des Ausführungsbeispiels gemäß Fig. 1,

Fig. 3 einen Schnitt nach Linie III-III der Fig. 4, jedoch bei geöffnetem Ringkörper,

Fig. 4 eine Ansicht entsprechend Fig. 2 von zwei gleich ausgebildeten und unmittelbar nebeneinander angeordneten Elementen.

Um beispielsweise bei einer Zuführeinrichtung für eine Verpackungsmaschine die zu verpackenden Gegenstände in mehreren parallelen Kanälen einstellbarer Breite führen zu können, sind am Anfang und am Ende der Förderstrecke dieser Zuführeinrichtung oberhalb der Fördermittel quer zu deren Förderrichtung je ein stabförmiger Träger 1 angeordnet, von dem in den Figuren nur ein kurzer Abschnitt mit gestrichelten Linien dargestellt ist. Der Träger 1 hat im Ausführungsbeispiel einen quadratischen Querschnitt, könnte aber auch eine andere Querschnittsform, beispielsweise eine Kreisform, haben. Auf jedem der Träger 1 ist eine der Zahl der für die Kanalbildung erforderlichen Seitenwände entsprechende Anzahl von gleich ausgebildeten Klemmringen 2 angeordnet, da jede der Seitenwände im Bereich ihres Anfangs und ihres Endes an die beiden Träger 1 angehängt werden muß. Die Verbindung mit dem Träger 1 erfolgt über je einen der Klemmringe 2 in bekannter Weise.

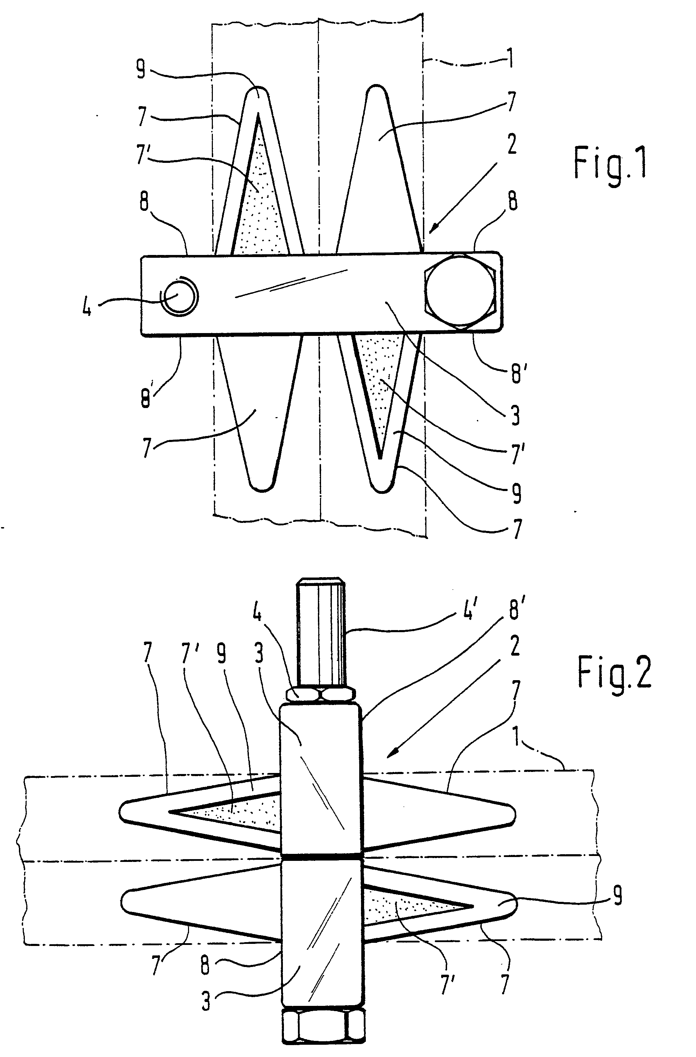

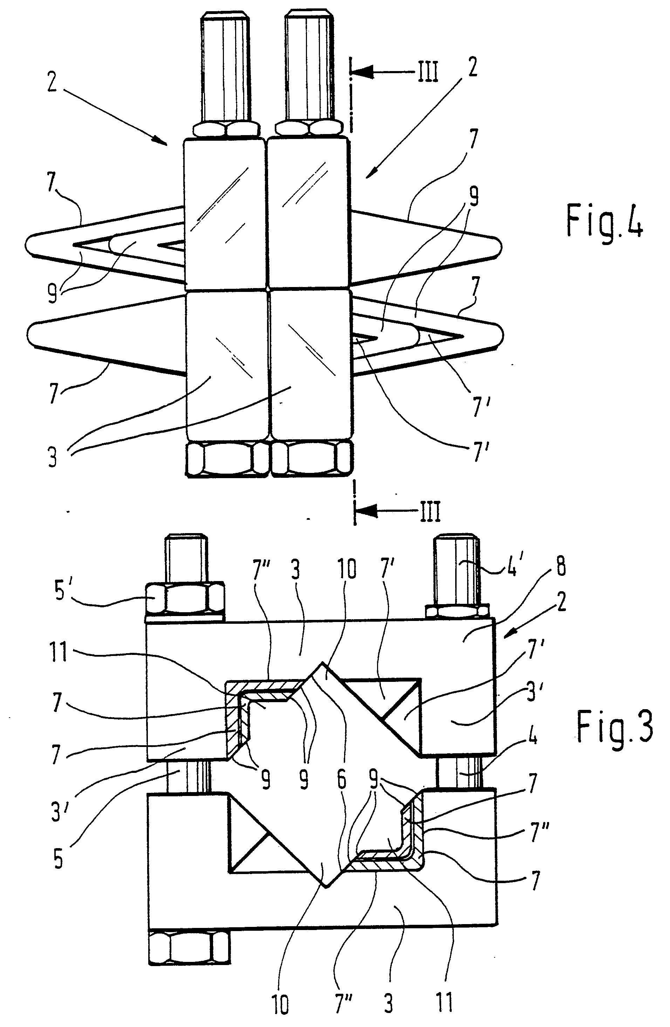

Wie die Fig. 1 bis 3 zeigen, hat der Klemmring 2 einen den Träger 1 umfassenden Klemmenkörper, der aus zwei gleich ausgebildeten Klemmenkörperteilen 3 besteht. Wie insbesondere in Fig. 3 erkennen läßt, hat der Klemmenkörper eine an die Außenkontur des Trägers 1 angepasste, also quadratische Innenkontur und eine entsprechende Außenkontur, wobei die Teilungsebene diagonal zur quadratischen Innenkontur verläuft.

Um die beiden Klemmenkörperteile 3 zusammen zu halten und den Träger 1 in wählbarer Position festklemmen zu können, sind die bei den kurzen Schenkel 3' der Klemmenkörperteile 3, welche bei zusammengesetztem Klemmenkörper aufeinander ausgerichtet sind, mit je einer Durchgangsbohrung versehen, welche von einem Verbindungsbolzen 4 bzw. von einer Schraube 5 durchdrungen werden. Im Ausführungsbeispiel ist deshalb die eine Durchgangsbohrung jedes Klemmenkörperteils 3 mit einem Gewinde für den Eingriff eines Gewindeabschnittes des zugehörigen Verbindungsbolzens 4 versehen. Zum Zusammenspannen des Klemmenkörpers brauchen somit diese Verbindungsbolzen 4 nur ausreichend tief in diese Gewindebohrung eingedreht zu werden. Selbstverständlich könnte man aber auch zwei solche Verbindungsbolzen versehen oder diese wie die Schraube 5 über den Klemmenkörper überstehen lassen und des Zusammenspannen mit Hilfe von Muttern 5 bewirken. Die Verbindungsbolzen 4 können, wie insbesondere Fig. 2 und 3 zeigen, an ihrem Kopfende einen zapfenförmigen Endabschnitt 4' haben, um in diesen Endabschnitt beispielsweise eine Schablone einzuhängen, mit deren Hilfe die einzelnen Klemmringe 2 in die gewünschte Position auf dem Träger 1 gebracht werden können, ehe sie dort festgeklemmt werden.

Wie Fig. 1 und 2 zeigen, haben die beiden Klemmenkörperteile 3 in axialer Richtung, also in Längsrichtung des Trägers 1, gemessen eine geringe Breite von beispielsweise 15 mm. Um dennoch eine wesentlich größere Erstreckung der an der Außenmantelfläche des Trägers 1 anliegenden Führungsfläche 6 in Trägerlängsrichtung zu erreichen, sind an die beiden Klemmenkörperteile 3 je zwei gleich ausgebildete Vorsprünge 7 angeformt, welche von der einen Stirnfläche 8 bzw. anderen Stirnfläche 8' des Klemmenkörpers abstehen und sich in entgegengesetzen Richtungen parallel zur Längsachse des Trägers erstrecken. Diese Vorsprünge 7 haben die Form der einen Hälfte einer in Längsrichtung geteilten, hohlen Pyramide mit quadratischem Grundriss, wobei die Teilungsebene die quadratische Grundfläche in der Diagonalen schneidet. Aus Sicherheits- und Fertigungsgründen ist das freie Ende der Vorsprünge abgerundet. Die Wandstärke des Vorsprunges ist überall zumindest annähernd gleich groß.

Wie insbesondere Fig. 3 zeigt, ist der eine Vorsprung 7 jedes Klemmenkörperteils im einen Eckbereich der Innenkontur und der andere Vorsprung 7 im anderen Eckbereich der Innenkontur an den Klemmenkörper angeformt, und zwar derart, daß sich die Innenfläche 7' der Vorsprünge durch den Klemmenkörperteil 3 hindurch bis zur gegenüberliegenden Stirnfläche fortsetzt. Die Wanddicke des Vorsprunges 7 sowie der Pyramidenwinkel sind so gewählt, daß die Außenfläche 7" der Vorsprünge 7 dort, wo sie an diejenige Stirnseite anschließt, über die der Vorsprung übersteht, um wenig mehr als die Wandstärke des Vorsprunges 7 nach innen versetzt ist. In Fig. 3 liegen deshalb die Schnittlinien zwischen der dem Betrachter zugekehrten Stirnfläche der Klemmenkörperteile 3 und den Außenflächen 7" der Vorsprünge 7 praktisch in der Verlängerung der Kanten, welche die Innenflächen 7' der nicht geschnitten dargestellten Vorsprünge 7 mit der dem Betrachter zugekehrten Stirnfläche bilden.

Die V-förmige Randzone 9 der Innenfläche 7' jedes Vorsprungs 7 bildet einen Teil der Führungsfläche des Klemmringes 2, mit dem dieser an der Außenmantelfläche des stabförmigen Trägers 1 anliegt. Diese Zone ist identisch mit der Schnittfläche, welch die Pyramide teilt, deren eine Hälfte den Vorsprung 7 bildet. Daher liegt die Randzone 9 in einer Ebene, welche sich in diagonaler Richtung vom kurzen Schenkel 3 des Klemmenkörperteils 3 zur Mitte des langen Schenkels erstreckt. Es wäre an sich ausreichend, die gesamte Führungsfläche 6 durch die Randzonen 9 der Innenfläche 7' der Vorsprünge 7 zu bilden. Im Ausführungsbeispiel ist jedoch der Mittelschenkel jedes Klemmenkörperteils 3 mit einer in axialer Richtung verlaufenden, keilförmigen Nut 10 versehen, deren Flanken in den von den Randzonen 9 definierten Ebenen liegen und dadurch die Führungsfläche vergrößern.

Die Innenfläche 7' jedes Vorsprunges 7 begrenzt mit der durch die zugehörige Randzone 9 definierten Führungsfläche einen halbpyramidenförmigen Hohlraum 11, der geometrisch ähnlich, also formgleich mit der Halbpyramide ist, welche die Außenfläche 7" des Vorsprunges 7 mit dem genannten Teil der Führungsfläche begrenzt. Der Hohlraum 11 hat also ebenfalls zum freien Ende des Vorsprunges 7 hin abnehmende Abmessungen eines Querschnittes, die um die Wandstärke des Vorsprunges geringer sind als die entsprechenden Außenabmessungen. Daher ist es, wie die Fig. 3 und 4 zeigen, möglich, die gegen den in Fig. 4 links dargestellten Klemmring weisenden Vorsprünge des rechts dargestellten Klemmringes in die Hohlräume 11 der in Fig. 4 nach links weisenden Vorsprünge des links dargestellten Klemmringes einzuführen, und zwar so weit, bis die beiden Klemmringkörper aneinander anliegen. Daher läßt sich beispielsweise die Kanalbreite bei einer Zuführungseinrichtung einer Verpackungsmaschine, bei der die Kanalseitenwände an die erfindungsgemäße Klemmringe angehängt sind, bis auf einen Wert reduzieren, der etwas kleiner ist als die axiale Breite der Klemmringkörper. Dennoch ist die axiale Erstreckung der aus den Teilen 6 und 9 gebildeten Führungsfläche und damit das Führungsverhältnis der Klemmringe im Ausführungsbeispiel etwa fünfmal so groß wie die bei einem Klemmring, der die Vorsprünge 7 nicht aufweist.

## Patentansprüche

1. Auf einem stabförmigen Träger (1) anzuordnendes und in Trägerlängsrichtung in wählbare Positionen verschiebbares Element (2) mit einem den Träger umfassenden Ringkörper (3), von dessen Innenmantelfläche zumindest ein Teilbereich als eine am Träger anliegende Führungsfläche ausgebildet ist, gekennzeichnet durch wenigstens einen vom Ringkörper (3) in axialer Richtung abstehenden Vorsprung (7), dessen dem Träger (1) zugewandte Innenseite (7') in einer Randzone (9) als eine sich über den Ringkörper hinaus erstreckende Führungsfläche (6) ausgebildet ist, und bezüglich einer durch die Randzone (9) definierten Fläche einen Hohlraum (11) begrenzt, der durch den Ringkörper (3) hindurch verlängert ist und ein der äußeren Querschnittskontur des Vorsprunges formgleiches, jedoch kleineres Querschnittsprofil hat, dessen Abmessungen gegen den Ringkörper (3) hin und durch diesen hindurch zunehmen.

2. Element nach Anspruch 1, dadurch gekennzeichnet, daß der Vorsprung (7) die Form eines durch zwei in wenigstens einer radialen Ebene liegende Schnitte begrenzten Teiles einer sich zu seinem freien Ende hin verjüngenden Hohlkörpers, insbesondere einer Pyramide oder eines Kegels, hat.

3. Element nach Anspruch 1 oder 2, gekennzeichnet durch wenigstens einen zweiten Vorsprung (7), der sich in entgegenge der Erstreckungsrichtung des ersten Vorsprunges (7) vom Ringkörper weg erstreckt.

4. Element nach Anspruch 3, dadurch gekennzeichnet, daß der zweite Vorsprung (7) die gleiche Form und Größe wie der erste Vorsprung (7) hat.

5. Element nach einem der Ansprüche 1 bis 4, dadurch gekennzeichnet, daß sich vom Ringkörper (3) in jede der beiden den Richtungen wenigstens je zwei Vorsprünge (7) wegerstrecken, wobei diejenigen Vorsprünge (7), welche die gleiche Erstreckungsrichtung haben, um den ihrer Anzahl entsprechenden Teil von 360° in Umfangsrichtung versetzt angeordnet sind und die sich in der einen Richtung erstreckenden Vorsprünge (7) gegenüber den sich in entgegengesetzter Richtung erstreckenden Vorsprünge (7) um die Hälfte dieses Teils von 360° in Umfangsrichtung versetzt sind.

6. Element nach einem der Ansprüche 1 bis 5, dadurch gekennzeichnet, daß der Ringkörper (3) wenigstens eine, vorzugsweise in einer Axialebene liegende Teilungsfuge hat und mit einer ihn im Sinne einer Verringerung der Weite dieser Teilungsfuge zu belasten vermögenden Spannvorrichtung (4, 5) versehen ist.

7. Element nach Anspruch 6, dadurch gekennzeichnet, daß der Ringkörper in wenigstens zwei mittels der Spannvorrichtung (4, 5) zusammenspannbare Teile (3) geteilt ist, die alle die gleiche Form haben und mit der gleichen Anzahl von Vorsprüngen (7) versehen sind.

8. Element nach Anspruch 6 oder 7, dadurch gekennzeichnet, daß die Spannvorrichtung wenigstens eine Spannschraube (4) aufweist, deren eines Ende als ein über den Ringkörper (3) überstehender Bolzen (4') ausgebildet ist.

9. Element nach einem der Ansprüche 1 bis 8, dadurch gekennzeichnet, daß die Führungsfläche (6) ein regelmäßiges Polygon definiert und die Vorsprünge (7) in den Ecken dieses Polygons angeordnet sind.

## Claims

1. An element (2) for disposition on a bar-shaped carrier (1) and adapted to slide in the longitudinal direction of the carrier into selectable positions and with an annular body (3) comprising the carrier and of which the inner surface has at least one partial zone which is constructed as a guide surface bearing on the carrier, characterised by, projecting in an axial direction from the annular body (3) at least one projection (7) of which the inside (7') which is towards the carrier (1) has a marginal zone (9) constructed as a guide surface (6) extending beyond the annular member, defining a cavity (11) in respect of a surface defined by the marginal zone (9) and which is extended through the annular member (3) and which has a cross-sectional profile of the same form as the outer cross-sectional contour of the projection but which is smaller, the dimensions of which increasing towards and through the annular member (3).

2. An element according to Claim 1, characterised in that the projection (7) has the form of a part of a hollow body, particularly a pyramid or a cone, which tapers towards its free end, being defined by two cuts located in substantially one radial plane.

3. An element according to Claim 1 or 2, characterised by at least a second projection (7) which extends away from the annular member in the opposite direction to the extension of the first projection (7).

4. An element according to Claim 3, characterised in that the second projection (7) has the same shape and size as the first projection (7).

5. An element according to one of Claims 1 to 4, characterised in that at least two projections (7) extend away from the annular member (3) in each of the two directions, those projections (7) which extend in the same direction being offset in a peripheral direction by that portion of 360° which corresponds to their number while the projections (7) which extend in one direction are offset in a peripheral direction in respect of the projections (7) which extend in the opposite direction by half this portion of 360°.

6. An element according to one of Claims 1 to 5, characterised in that the annular member (3) has at least one dividing joint disposed preferably in an axial plane and is provided with a clamping device (4, 5) which biases it, tending to reduce the width of the dividing joint.

7. An element according to Claim 6, characterised in that the annular member is divided into at least two parts (3) adapted to be clamped together by means of the clamping device (4, 5), all the parts (3) having the same shape and being provided with the same number of projections (7).

8. An element according to Claim 6 or 7, characterised in that the clamping device comprises at least one clamping screw (4), one end of which is constructed as a bolt (4') projecting beyond the annular member (3).

9. An element according to one of Claims 1 to 8, characterised in that the guide surface (6) defines a regular polygon and in that the projections (7) are disposed in the corners of this polygon.

## Revendications

1. Elément apte à être disposé sur un support (1) en forme de barre et qui peut coulisser, selon la direction longitudinale du support, pour venir en des positions choisies, comportant un corps annulaire (3) qui entoure le support et dont au moins une zone partielle de la surface intérieure est conçue comme surface de guidage en appui sur le support, caractérisé par au moins une saillie (7) qui s'étend à partir du corps annulaire (3) en direction axiale et dont la face intérieure (7'), côté support (1), est conçue, dans une zone de bordure (9), comme surface de guidage (6) s'étendant au-delà du corps annulaire qui délimite, relativement à une surface définie par la zone de bordure (9), un espace creux (11) qui se prolonge à travers le corps annulaire (3) et qui présente un profil de section de même forme que le contour de section extérieur de la saillie, mais plus petit et dont les dimensions vont en croissant en direction du corps annulaire (3) et à travers celui-ci.

2. Elément selon la revendication 1, caractérisé en ce que la saillie (7) a la forme d'une partie, limitée par deux sections situées dans au moins un plan radial, d'un corps creux qui va en se rétrécissant en direction de son extrémité libre, en particulier d'une pyramide ou d'un cône.

3. Elément selon la revendication 1 ou 2, caractérisé par au moins une seconde saillie (7) qui s'étend en direction opposée à la direction de l'extension de la première saillie (7), en partant du corps annulaire.

4. Elément selon la revendication 3, caractérisé en ce que la seconde saillie (7) a la même forme et la même dimension que la première saillie (7).

5. Elément selon l'une des revendications 1 à 4, caractérisé en ce que, en partant du corps annulaire (3), dans chacune des deux directions, s'étendent au moins respectivement deux saillies (7), les saillies (7) qui ont la même direction d'extension étant décalées dans la direction périphérique d'une division de 360° correspondant à leur nombre ; et en ce que les saillies (7) qui s'étendent dans l'un des sens de cette direction sont décalés, dans la direction périphérique, par rapport aux saillies (7) qui s'étendent dans le sens opposé, de la moitié de cette division de 360°.

6. Elément selon l'une des revendications 1 à 5, caractérisé en ce que le corps annulaire (3) présente au moins un joint de séparation situé de préférence dans un plan axial et en ce qu'il est muni d'un dispositif de bridage (4, 5) qui permet de le contraindre dans le sens d'une diminution de la largeur de ce joint de séparation.

7. Elément selon la revendication 6, caractérisé en ce que le corps annulaire est divisé en au moins deux parties (3) que l'on peut assembler au moyen du dispositif de bridage (4, 5), qui ont toutes la même forme et sont munies du même nombre de saillies (7).

8. Elément selon la revendication 6 ou 7, caractérisé en ce que le dispositif de bridage présente au moins une vis de bridage (4) dont l'une des extrémités est conçue sous forme de broche (4') débordant au-dessus du corps annulaire (3).

9. Elément selon l'une des revendications 1 à 8, caractérisé en ce que la surface de guidage (6) définit un polygone régulier et en ce que les saillies (7) sont disposées dans les angles de ce polygone.

Fig.1

Fig.2

**0 210 375**

Fig.4

Fig.3